# EUROPEAN PATENT APPLICATION

(11) **EP 2 952 889 A1**
(43) Date of publication of application: **09.12.2015**
(21) Application number: 15170778.3
(22) Date of filing: 05.06.2015
(51) Int. Cl.: G01N 27/70, G01N 29/04, G01N 21/88, G01N 21/95, G01N 21/956, G01N 35/00, G01N 21/84, G01N 21/892

(54) **SCRATCH VERIFICATION APPARATUS AND METHOD**

(30) Priority: 06.06.2014 US 201414297699
(71) Applicant: Hamilton Sundstrand Corporation, Charlotte, NC 28217 (US)
(72) Inventor: Fordyce, Russell, Rockford, Illinois 61107 (US); Chase, Ryan, Janesville Wisconsin 53546 (US)
(74) Representative: Leckey, David Herbert

(57) **Abstract**

A scratch verification method and apparatus (1) for detecting and analyzing defects in a surface is disclosed. The apparatus (1) include a detection device (6) with a plurality of emission sources (7) and a plurality of sensors (8). A processor (9) is connected to the detection device (6) and is configured to apply one or more sets of criteria to one or more corresponding target areas (5) of a surface (2). The processor (9) is further configured to differentiate between data from the one or more target areas (5).

## Description

### BACKGROUND

The present disclosure relates generally to an apparatus and method for measuring scratches and, more particularly, to analysis of data for purposes of determining an appropriate corrective action.

There are many instances where it is desirable to measure a scratch on a surface. For example, in airplane surfaces scratches can cause structural problems or, in the case of a stealth-type aircraft, scratches in the surface coating may reduce the stealth effectiveness, when the scratches extend beyond a certain depth. In other examples, the scratch may cause friction with other working parts or give rise to aerodynamic inefficiencies.

Various methods have been employed heretofore to measure scratch depth. For example, chemical methods have been developed, but are difficult to manage and create safety issues, in addition to potentially affecting the integrity of adjacent surfaces. Electromagnetic and optical techniques exist, but typically require significant operator input to complete analysis. These methods consume large amounts of time and often result in numerous false positives, wasting additional time and resources.

### SUMMARY

Disclosed herein is a method of verifying defects in a surface that includes aligning a verification apparatus with respect to a first target area of a surface. The first target area is scanned with a detection device having one or emission sources and one or more sensors. Information from the detection device is processed by a processor to generate one or more data sets describing the first target area. The one or more data sets is then compared with a first set of criteria associated with the first target area to determine an appropriate action.

Another aspect of the disclosure provides a scratch verification apparatus for detecting and analyzing defects in a surface that includes a detection device with a plurality of emission sources and a plurality of sensors. The emission sources include a first emission source emitting a first signal and a second emission source emitting a second signal. A processor is connected to the detection device and is configured to apply one or more sets of criteria to one or more corresponding target areas of a surface. The processor is further configured to differentiate between data from the one or more target areas. A data source is connected to the processor, containing information regarding one or more boundaries of the one or more target areas. The data source further contains information representing the one or more sets of criteria.

### BRIEF DESCRIPTION OF THE DRAWINGS

The following descriptions should not be considered limiting in any way. With reference to the accompanying drawings, like elements are numbered alike:
Fig. 1 is a schematic of a scratch detection and analysis apparatus according to one embodiment; and
Fig. 2 is a flowchart of a scratch detection and analysis method according to another embodiment.

### DETAILED DESCRIPTION

A detailed description of one or more embodiments of the disclosed apparatus and method are presented herein by way of exemplification and not limitation with reference to the Figures. It is to be understood that other embodiments may be utilized and changes may be made without departing from the scope of the present disclosure. In particular, the disclosure provides various examples related to verification of surface defects on aircraft parts, whereas the advantages of the present disclosure as applied in a related field would be apparent to one having ordinary skill in the art and are considered to be within the scope of the present invention.

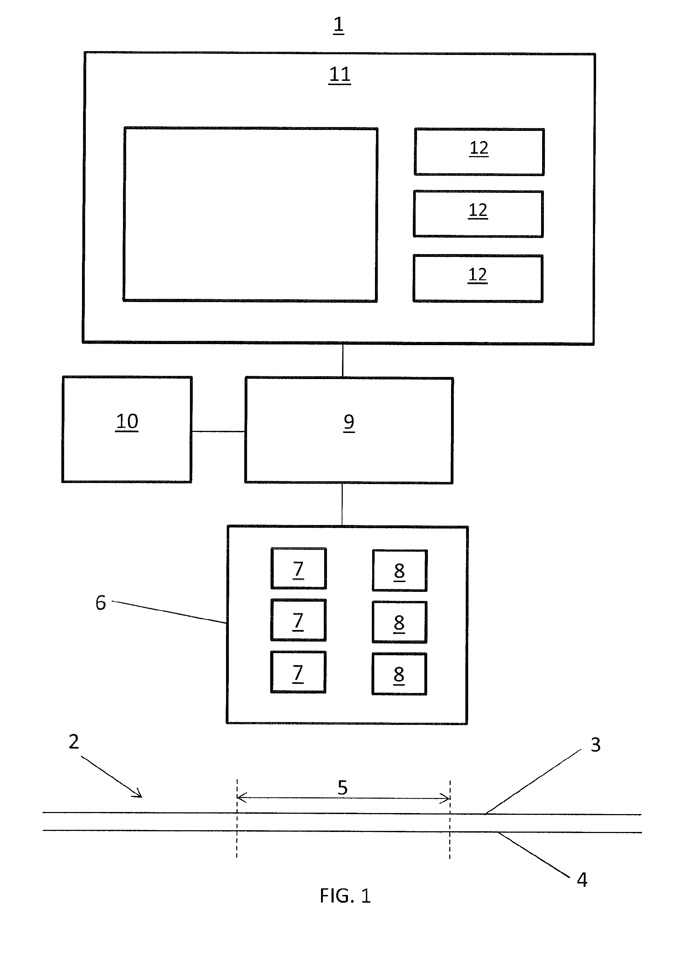

Fig. 1 shows a scratch verification apparatus 1 for verification of defects in a surface 2. The surface 2 may comprise a coating 3 disposed on a substrate 4. The surface 2 may comprise one or more target areas 5 that are analyzed in succession or simultaneously. The scratch verification apparatus 1 includes a detection device 6 comprising one or more emission sources 7 and one or more sensors 8. The emission sources 7 may be configured to emit a signal over one or more ranges in the electromagnetic spectrum, such as visible light, ultraviolet light, infrared light, etc. The emission sources 7 may comprise light emitting diodes (LEDs), lasers, or any other sources known in the art. In other examples, one or more emission sources 7 may be configured to emit sound waves (e.g., ultrasonic), vibration energy, electrical signals, or the like. The emission sources 7 may be provided in an emission source array.

The signal emitted by the emission source 7 is emitted onto the surface 2 and reflected, partially reflected, or at least partially reflected, to the one or more sensors 8. The sensors 8 are configured to detect the signal of the one or more emission sources 7, and may be paired to a corresponding emission source 7. For example, the sensors may be configured to detect electromagnetic radiation from one or more of the emission sources 7 that has been reflected off of the surface 2. The sensors 8 configured to detect radiation may be fiber optic sensors, CCD devices, or any other sensor known in the field. In some examples the sensors 8 are configured to detect radiation in specific ranges of the electromagnetic spectrum corresponding to the one or more emission sources 7. The sensor array may comprise sensors 8 individually configured to detect radiation from a selected range of the electromagnetic spectrum. The selected range of the electromagnetic spectrum may be chosen according to the known properties of the surface 2 or the coating 3. In other examples, the sensors 8 may be devices configured to sense sound waves, vibration energy, electrical signals, or any other signal that is emitted by the one or more emission sources 7. The sensors 8 may be arranged in a sensor array that comprises a plurality of sensors 8. In some examples, the detection device 6 further comprises a resonant chamber for generating a signal that differentiates the coating 3 from the substrate 4.

The apparatus 1 further comprises a processor 9 that receives an input signal from the sensors 8 and processes the input signal, for example, to process an image of the surface 2 at the location over which the apparatus 1 is scanning. The processor 9 may also be configured to control the emission sources 7; e.g., individually switch the sources 7 on/off, vary the amount of power, etc. The processor 9 may be used to compare the signal emitted by one or more emission sources 7 with the signal detected by one or more of the corresponding sensors 8. For example, the processor 9 may compare the signals to calculate the phase shift or time shift of a particular signal, to calculate the resistance or other electrical characteristic of the surface between two points, or any other phenomenon that can be used to indicate the properties of the structure.

The apparatus 1 may further comprise a data source 10 connected to the processor 9. In some examples, the data source 10 may be a locally contained data storage device, such as a flash data storage device, or may be a remote server or other device connected to the processor 9 by wireless link or some other communication medium. Information contained on the data source 10 may be used by the processor 9 to analyze and/or classify a particular defect in a surface. The data source 10 may also contain information about the surface 2, such as information specific to the one or more target areas 5 thereby enabling the apparatus to recognize and differentiate between one or more target areas 5. Further, each of the one or more target areas 5 may have a corresponding set of criteria. The set of criteria includes information, such as thresholds or other parameters, that allow the processor 9 to determine, for example, whether or not the defect is acceptable or may be repaired.

The apparatus 1 shown in Fig. 1 also includes a user interface 11, which may comprise a display screen for showing images of the surface 2 or one of the target areas 5 of the surface 2. The user interface 11 may also be configured display analysis of a particular defect. The user interface 11 may also include one or more inputs 12, such as buttons, touch screens, etc. The inputs 12 may allow a user to begin or pause a scan, repeat a scan, compare results, verify thresholds, or any other useful input. In some examples, one of the one or more inputs 12 allows the user to set the orientation of the apparatus 1 with respect to the surface 2, allowing the processor to determine the physical location of the boundaries of each of the one or more target areas 5. In other examples, the processor 9 may recognize the boundaries of the one or more target areas 5 by correlating the particular location with physical features that can be recognized by analyzing the input signal from the detection device 6. The user interface 11 may be directly attached to the processor 9 and other features of the apparatus 1, or may comprise another device, such as a computing device in a remote location.

In operation, the scratch verification apparatus 1 described above is used to verify, i.e., analyze, defects on a surface. In some examples, the apparatus 1 is used to scan a TARGET AREA at a location where a defect is known to exist, i.e., is visible. In other examples, the scratch verification apparatus 1 is used to scan a surface 2 in its entirety to detect and analyze the surface 2 for a range of defects and provide determinations regarding appropriate corrective measures. The surface 2 may be, for example, the outer surface of an entire part, e.g., a rotor for a turbine. The surface 2 may comprise a plurality of target areas 5, some of which may have a coating 3 while others do not. Further, the coating 3 may vary from one area of a surface 2 to another. The apparatus 1 may be configured to recognize where a coating 3 begins relative to where it should begin. The apparatus 1 may also be configured to vary the signal emitted from the emission sources 7 according to the material forming the substrate 4 and the coating 3.

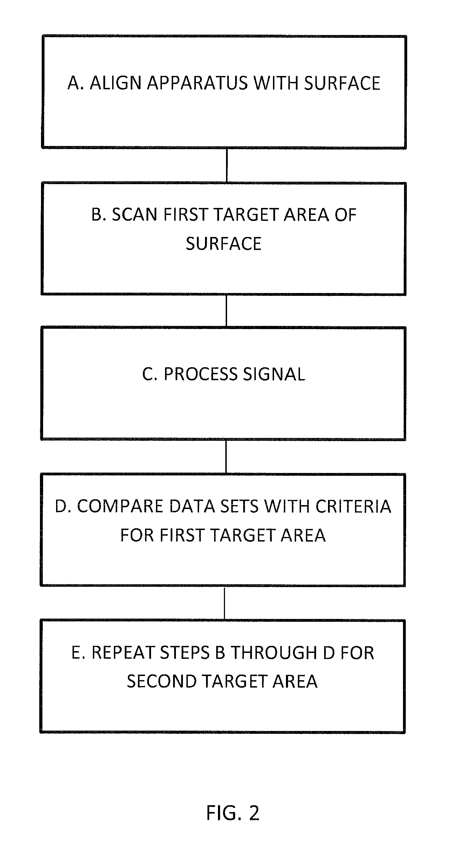

A method of detecting and/or analyzing a surface defect is shown in Fig. 2. First, the apparatus is aligned with the surface. By aligning, it is meant that the apparatus achieves an orientation with the surface from which a scan may commence that allows the apparatus to identify boundaries of the surface and associated areas of the surface, which may correlate to different sets of criteria for analyzing defects. This may be accomplished by bringing the apparatus into a first location where the orientation of the apparatus to the surface is known. This location may then be verified by the detection device of the apparatus. In other examples, the step of aligning the apparatus with the surface may be accomplished by placing the apparatus in a scanning position with respect to a selected target area or portion thereof where a defect has been identified or may exist. In some examples, the step of aligning the part with the surface may further comprise identifying the surface and/or the target area where the scan is to begin, such as by user input.

The surface is then scanned with the detection device of the apparatus. As noted above, the emission sources and/or the sensors of the detection device may be controlled to operate in a manner specific to a particular coating, substrate, or other attribute, including according to defects of interest for a particular target area. For example, in some locations a scratch in the coating may be acceptable where as an omission of the coating in that area may not. Also, in some locations a scratch in the coating may be analyzed and determined that corrective action is acceptable, where a scratch in the substrate with the coating applied on the top thereof would otherwise render the surface unacceptable, resulting in a determination that the surface should be discarded.

The information received from the detection device is then processed, for example, according to the arrangement of the detection device. The processed information may include a first data set representing information from a first range of the electromagnetic spectrum and a second data set representing information from a second range of the electromagnetic spectrum. The processed information may be further divided into a plurality of data sets based on electromagnetic spectrum, angle with respect to the surface, etc. The processed information can then be analyzed by comparing the processed information to a set of criteria for a selected target area to determine the presence of any defects, whether or not those defects may be corrected, and whether or not the surface (part) should be discarded. This determination can then be returned to the user or to another device. In some examples, the steps recited above may be repeated for each of a plurality of target areas on a surface.

While the invention has been described with reference to an exemplary embodiment or embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. , do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A method of verifying defects in a surface (2), comprising:
aligning a verification apparatus (1) with respect to a first target area (5) of a surface;
scanning a first target area (5) of a surface (2) with a detection device (6) having one or emission sources (7) and one or more sensors (8);
processing information generated by the detection device (6) with a processor (9) to generate one or more data sets describing the first target area (5);
comparing the one or more data sets describing the first target area (5) with a first set of criteria associated with the first target area (5) to determine an appropriate action.

2. The method of claim 1, further comprising:
recognizing a boundary between the first target area (5) and a second target area (5);
scanning the second target area (5) of the surface (2) with the detection device (6);
processing information generated by the detection device (6) with a processor (9) to generate one or more data sets describing the second target area (5); and
comparing the one or more data sets describing the second target area (5) with a second set of criteria associated with the second target area (5) to determine an appropriate action.

3. The method of claim 1 or 2, wherein the one or more emission sources (7) include a first emission source (7) emitting energy from a first portion of the electromagnetic spectrum and a second emission source (7) emitting energy from a second portion of the electromagnetic spectrum.

4. The method of claim 3, wherein the one or more data sets include a first data set representing data from the first portion of the electromagnetic spectrum and a second data set representing data from the second portion of the electromagnetic spectrum.

5. A scratch verification apparatus (1) for detecting and analyzing defects in a surface, comprising:
a detection device (6) having a plurality of emission sources (7) and a plurality of sensors (8), wherein the emission sources (7) include a first emission source (7) emitting a first signal and a second emission source (7) a second signal that differs from the first signal;
a processor (9) connected to the detection device (8), the processor (9) configured to apply one or more sets of criteria to one or more corresponding target areas (5) of a surface (2), the processor (9) configured to differentiate between data from the one or more target areas (5); and
a data source (10) connected to the processor (9), the data source (10) containing information regarding one or more boundaries of the one or more target areas (5), the data source (10) further containing the one or more sets of criteria.

6. The scratch verification device of claim 5, further comprising a user interface (11).

7. The scratch verification device of claim 5 or 6, wherein the data source (10) further comprises a remote server or a flash data storage device.

8. The scratch verification device of claim 5, 6 or 7, wherein the detection device (6) further comprises a resonant chamber.
